(19) Europäisches Patentamt / European Patent Office / Office européen des brevets

(11) **EP 2 635 447 B1**

(12) **EUROPÄISCHE PATENTSCHRIFT**

(45) Veröffentlichungstag und Bekanntmachung des Hinweises auf die Patenterteilung:
**15.10.2014  Patentblatt 2014/42**

(51) Int Cl.:
***B60D 1/06*** (2006.01)        ***B60D 1/58*** (2006.01)

(21) Anmeldenummer: **11778533.7**

(86) Internationale Anmeldenummer:
**PCT/EP2011/005487**

(22) Anmeldetag: **31.10.2011**

(87) Internationale Veröffentlichungsnummer:
**WO 2012/059207 (10.05.2012 Gazette 2012/19)**

(54) **VERFAHREN ZUR BESTIMMUNG DER DEICHSELLÄNGE EINES ANHÄNGERS EINES ZUGFAHRZEUGES**

METHOD FOR DETERMINING THE DRAWBAR LENGTH OF A TRAILER OF A TRACTOR VEHICLE

PROCÉDÉ DE DÉTERMINATION DE LA LONGUEUR DU TIMON D'UNE REMORQUE D'UN VÉHICULE TRACTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2010  DE 102010050474**

(43) Veröffentlichungstag der Anmeldung:
**11.09.2013  Patentblatt 2013/37**

(73) Patentinhaber: **Audi AG**
**85045 Ingolstadt (DE)**

(72) Erfinder:
• **KOSSIRA, Christoph**
  **85053 Ingolstadt (DE)**
• **BAUDISCH, Andreas**
  **93087 Alteglofsheim (DE)**
• **OBERMÜLLER, Anton**
  **82549 Königsdorf (DE)**
• **VOLL, Ulrich**
  **80336 München (DE)**

(56) Entgegenhaltungen:
DE-A1-102004 050 149    US-A1- 2004 130 441
US-A1- 2009 005 932

**Beschreibung**

Die Erfindung betrifft ein Verfahren zur Bestimmung der Deichsellänge eines Anhängers eines Zugfahrzeuges gemäß Oberbegriff des Patentanspruchs 1 sowie die Verwendung dieses Verfahrens zur Bestimmung eines maximal zulässigen Knickwinkels zwischen dem Zugfahrzeug und dessen Anhänger.

Das Rangieren eines Fahrzeuggespanns, wie z. Bsp. eines Personenkraftwagens oder eines Lastkraftwagens mit Anhänger, insbesondere einem einachsigen Anhänger im Sinne der deutschen StVO, stellt hohe Anforderungen an einen Fahrer eines solchen Fahrzeuges. Der Knickwinkel zwischen der Längsachse des Zugfahrzeugs und des über eine Deichsel angehängten Anhängers stellt einen zusätzlichen Freiheitsgrad dar, der beim Rückwärtsfahren zu Instabilitäten führen kann, welche vom Fahrer über entsprechende Lenkwinkelkorrekturen ausgeglichen werden müssen. So besteht bei Überschreiten eines maximalen Knickwinkels die Gefahr des Ausknickens des Anhängers, wenn nicht frühzeitig gebremst oder vorwärts gefahren wird. Ein Knickwinkel jenseits des maximalen Knickwinkels kann nur durch ein Geradeziehen vorwärts reduziert werden.

Das kinematische und dynamische Verhalten eines Anhängers beim Rangieren, insbesondere das Ausknickverhalten beim Rückwärtsrangieren hängt vom Abstand zwischen dem Kugelkopf der Anhängerkupplung bzw. dem Zugmaul der Deichsel und der Achse des Anhängers, also der Deichsellänge ab. Für mehrachsige Anhänger lässt sich eine effektive Deichsellänge angeben, bspw. als der Abstand eines Punktes zwischen dem Zugmaul und einem zwischen den beiden Achsen des Anhängers liegenden Punkt.

So beträgt bspw. der maximal zulässige Knickwinkel, bei dem noch ein Geradeziehen des Anhängers bei Rückwärtsfahrt möglich ist, bei einem kurzen Anhänger mit einer Deichsellänge von 1,5 m ca. 25°, während bei einem langen Anhänger mit einer Deichsellänge von 4,9 m dieser Wert auf ca. 85° ansteigt. Diese Beispielwerte gelten für einen Radstand von ca. 3m und einen Abstand von Kugelkopf zur Hinterachse des Anhängers von ca. 1 m bei einem nur vorderachsgelenkten Zugfahrzeug.

So wäre es möglich, durch die Bestimmung des maximal zulässigen Knickwinkels für Fahrzeuge mit und ohne Hinterachslenkung spezifisch für den angehängten Anhänger den vollen Manövrierspielraum des Gespanns von einem Rangierassistenten des Zugfahrzeugs nutzen zu lassen. Ist eine solche Deichsellänge nicht bekannt, würde der Rangierassistent von einem maximal zulässigen Knickwinkel ausgehen, der sich aus der kürzest möglichen Deichsellänge eines zulässigen Anhängers ergeben würde.

Um daher den vollen Manövrierspielraum eines Gespanns für den tatsächlich angehängten Anhänger voll zu nutzen, ist die Kenntnis von dessen Deichsellänge unabdingbar.

Aus der US 2004/0130441 A1 ist ein Steuerungssystem zur Schätzung der Deichsellänge eines Anhängers eines Zugfahrzeugs mit Hinterachslenkung bekannt, bei welchem mittels eines Algorithmus ein Schätzwert für den Knickwinkel auf der Basis einer geschätzten Deichsellänge, dem Lenkwinkel der Vorderräder und der Hinterräder, einem gemessenen Knickwinkel, der Geschwindigkeit des Zugfahrzeugs und dessen Gierrate bestimmt wird. Der geschätzte Knickwinkel wird mit dem gemessenen Knickwinkel verglichen, um aus der Differenz einen Knickwinkelfehler zu erzeugen, der in einen Deichsellängenfehler konvertiert wird. Dieser Deichsellängenfehler wird mit dem Deichsellängen-Schätzwert verglichen, um damit den Deichsellängen-Schätzwert zu korrigieren. Nach einigen Berechnungsschleifen soll der korrigierte Deichsellängen-Schätzwert mit dem tatsächlichen Wert der Deichsellänge übereinstimmen.

Das in dieser US 2004/0130441 A1 beschriebene Schätzverfahren zeichnet sich dadurch aus, dass während einer Berechnungsperiode aus den Bewegungsgrößen der Zugmaschine und des Anhängers, nämlich Zugmaschinengeschwindigkeit, Lenkwinkel an der Vorderachse und an der Hinterachse, der Gierrate sowie dem gemessenen Knickwinkel und dem Knickwinkel-Schätzwert aus der letzten Berechnungsperiode einen aktuellen Knickwinkel-Schätzwert zu bestimmen, der mit dem aktuell gemessenen Knickwinkel verglichen und entsprechend der Differenz ein Knickwinkel-Fehlersignal erzeugt wird. Dieses Knickwinkel-Fehlersignal wird einem PID-Regler zugeführt, der hieraus ein Deichselwinkel-Fehlersignal erzeugt, mit dem der in der vorangegangenen Berechnungsperiode bestimmte Deichselwinkel-Schätzwert korrigiert wird. Der so korrigierte Deichselwinkel-Schätzwert wird als aktueller Deichselwinkel-Schätzwert für die nächste Berechnungsperiode ausgegeben.

Das Schätzverfahren wird beendet, wenn der Knickwinkel-Fehler während einer bestimmten Zeitperiode innerhalb eines vorgegebenen Wertebereichs liegt. In diesem Fall wird der aktuelle Deichselwinkel-Schätzwert als aktueller Wert der Deichsellänge akzeptiert.

Es hat sich bei diesem bekannten Schätzverfahren der Deichsellänge herausgestellt, dass deren Einsetzbarkeit sich auf wenige Fahrsituation von Zugfahrzeug und Anhänger beschränkt und daher kaum praxistauglich ist. Insbesondere sei eine genaue Schätzung dann erreichbar, wenn kurze Vorwärts- oder Rückwärtsfahrmanöver durchgeführt werden; ferner seien auch Lenkmanöver, die zu kurven- oder sinusförmigen Fahrmanöver führen geeignet, um eine genaue Schätzung der Deichsellänge zu erzielen. Weiterhin ist ein auf einem ähnlichen Schätzprinzip beruhendes Schätzverfahren zur Deichsellängenschätzung aus der US 2005/0055138 A1 bekannt, bei dem aus einem in einem vorhergehenden Rechenzyklus bestimmten Deichsellängen-Schätzwert, den gemessenen Größen Lenkwinkel der Vorder- und Hinterachse eines Zugfahrzeuges und dessen Geschwindigkeit und Gierrate zusätzlich eine Gierrate des Anhängers geschätzt wird, die mit einer mittels eines Sensors des Anhängers gemessenen Gierrate verglichen wird. Die Differenz dieser beiden Größen wird als Gierrate-Fehlersignal einem PID-Regler zugeführt, der hieraus ein Deichselwinkel-Fehlersignal erzeugt, mit dem der in der vorangegangenen Berechnungsperiode bestimmte Deichselwinkel-Schätzwert korrigiert wird. Der so korrigierte Deichselwinkel-Schätzwert wird als aktueller Deichselwinkel-Schätzwert für die nächste Berechnungsperiode ausgegeben.

Nachteilig bei diesem bekannten Schätzverfahren nach der US 2005/0055138 A1 liegt in dem Erfordernis eines Gierratensensors für den Anhänger. Ferner hat sich auch dieses bekannte Verfahren als wenig praxistauglich erwiesen, da hier genaue Schätzwerte für die Deichsellänge nur erreichbar sind, wenn bestimmte Fahrmanöver, wie kurze Vor- und Rückwärtsbewegungen oder kurven- oder sinusförmige Fahrmanöver durchgeführt werden.

Um den maximal zulässigen Knickwinkel eines Gespanns zu bestimmen, sind auch Verfahren bekannt, die jedoch von einer bekannten Deichsellänge ausgehen, wie bspw. in der DE 2007 025 969 A1 beschrieben wird. Bei einem solchen Verfahren ist es in nachteiliger Weise erforderlich, dass bei einem Einsatz von verschiedenen Anhängern deren Parameter jeweils aktuell in einen Assistenten eingegeben werden müssen.

Aufgabe der Erfindung ist es daher, ein Verfahren zur Bestimmung der Deichsellänge eines Anhängers eines Zugfahrzeuges der eingangs genannten Art anzugeben, mit dem eine hohe Genauigkeit des Schätzwertes für die Deichsellänge erzielt wird, insbesondere ohne dass es hierzu erforderlich ist, bestimmte Fahrmanöver durchzuführen.

Diese Aufgabe wird gelöst durch ein Verfahren mit den Merkmalen des Patentanspruchs 1.

Dieses erfindungsgemäße Verfahren zeichnet sich dadurch aus, dass das Schätzverfahren ausgebildet ist zur Erzeugung dreier Folgen von Deichsellängen-Schätzwerten für die Deichsellänge, wobei die erste Folge aus einer Folge von Schätzzeitfenstern gebildet werden, wobei das Ende eines Schätzzeitfensters durch das Vorliegen vorgegebener Bedingungen hinsichtlich dynamischer Bewegungsgrößen des Zugfahrzeugs und des Anhängers definiert wird. Die zweite fortlaufende Folge wird aus den bisher vorliegenden Deichsellängen-Schätzwerten der Schätzzeitfenster mittels statistischer Auswertung als statistische Deichsellängen-Schätzwerte mit jeweils einem Gütemaß bestimmt. Insbesondere wird mit diesem Schritt eine geglättete Folge von Schätzwerten erzeugt, so dass dadurch statistische Ausreißer beseitigt werden. Die derart bestimmten statistischen Deichsellänge-Schätzwerte werden mit ihren jeweiligen Gütemaß zur Erzeugung der dritten Folge, den finalen Schätzwerten für die Deichsellänge, verwendet.

Diese Folgen werden somit fortlaufend, also "on-the-fly" aus den jeweiligen Vorgängerfolgen bis zum jeweils aktuellen Zeitschritt bzw. Rechenschritt erzeugt und laufen prinzipiell unbegrenzt weiter, falls dieser Vorgang nicht abgebrochen wird.

Diese finale Folge von Deichsellängen-Schätzwerten konvergieren mit hoher Wahrscheinlichkeit in eine Umgebung eines Wertes, der sich dem wahren Wert der Deichsellänge von unten annähert.

Dies stellt sicher, dass mit hoher Wahrscheinlichkeit ein genauer und für das Rangieren sicherer Schätzwert der Deichsellänge bestimmt wird. Dabei ist von Vorteil, dass der mit dem Gütemaß gewichtete Deichsellängen-Schätzwert einen Wert für die Deichsellänge liefert, der mit hoher Wahrscheinlichkeit sicherstellt, dass bei der Berechnung des maximal zulässigen Knickwinkels nicht von einem gegenüber der tatsächlichen Deichsellänge zu großen Wert ausgegangen wird. So ist es möglich, bei Unterschreitung eines vorgegebenen Wertes des Gütemaßes von einem Worst-Case-Wert für die Deichsellänge zur Berechnung des maximal zulässigen Knickwinkels auszugehen.

Bei einer besonders vorteilhaften Weiterbildung der Erfindung erfolgt die Erzeugung der Deichsellängen-Schätzwerte unter Verwendung von Knickwinkel-Schätzwerten für den Knickwinkel und Offset-Schätzwerten für den Offset zwischen dem Knickwinkel-Schätzwert und dem sensorisch erfassten Knickwinkel, wobei die Knickwinkel-Schätzwerte für den Knickwinkel und die Offset-Schätzwerte für den Offset zwischen dem Knickwinkel-Schätzwert und dem sensorisch erfassten Knickwinkel mittels des Schätzverfahrens bestimmt werden.

Damit wird in vorteilhafter Weise auch der der Messung des Knickwinkels innewohnende Offsetwert geschätzt, der sich auch zeitlich ändern kann, um damit den Schätzwert für die Deichsellänge weiter zu verbessern, d. h. mit dem erfindungsgemäßen Schätzverfahren werden gleichzeitig zwei unbekannte Parameter, nämlich die Deichsellänge sowie der Offset des gemessenen Knickwinkels bestimmt.

Gemäß einer Ausgestaltung der Erfindung wird zur statistischen Auswertung der Deichsellängen-Schätzwerte aus den vorliegenden Deichsellängen-Schätzwerten inkrementell und fortlaufend, also "on-the-fly" ein ungerichteter Graph Knoten für Knoten aufgebaut, wobei die bisherigen Deichsellängen-Schätzwerte den Knoten entsprechen und in Abhängigkeit des Wertes eines Abstandsmaßes zwischen den Deichsellängen-Schätzwerten als Knoten eine Kante gezogen wird. In vorteilhafter Weise kann dies zur Erkennung von sogenannten "Ausreißern" verwendet werden.

Hierzu wird in einer Weiterbildung der Erfindung der statistische Deichsellängen-Schätzwert aus den Knoten mit maximalen Grad bestimmt und das Gütemaß in Abhängigkeit vom bisher erzeugten Graphen bestimmt. Typischerweise wird das Gütemaß nur von der Struktur der Grade der Knoten im Graphen abhängen, also vorzugsweise vom maximalen Grad des Graphen. Alternativ kann der Deichsellängen-Schätzwert auch als Minimum der den Knoten mit maximalem Grad entsprechenden Schätzwerten bestimmt werden oder als Maximum der den Knoten mit maximalen Grad entsprechenden Schätzwerten.

Darüber hinaus ist es weiterbildungsgemäß auch möglich, den Deichsellängen-Schätzwert aus der Menge der Schätzwerte zu bestimmen, die den Knoten entsprechen, welche an einer maximalen Clique des Graphen beteiligt sind, wobei das Gütemaß wieder in Abhängigkeit vom maximalen Grad bestimmt wird.

Gemäß einer Weiterbildung der Erfindung ist es besonders vorteilhaft, Beginn und Ende des jeweiligen Schätzzeitfensters aus wenigstens den Bewegungsgrößen Drehrate des Zugfahrzeugs, der Zugfahrzeuggeschwindigkeit und der Drehrate des Anhängers gegenüber dem Zugfahrzeug abzuleiten, vorzugsweise werden Schwellwerte für die Bewegungsgrößen bestimmt, als Funktion derer das Schätzzeitfenster geöffnet bzw. geschlossen wird. Optional kann auch die Querbeschleunigung des Zugfahrzeugs herangezogen werden.

Gemäß weiteren vorteilhaften Ausgestaltungen der Erfindung werden zur Verbesserung des Schätzergebnisses Bedingungen formuliert, wonach bei deren Vorliegen die Schätzwerte verworfen werden. So werden die während eines Schätzzeitfenster erzeugten Schätzwerte verworfen, wenn die Zeitdauer des Schätzzeitfensters kleiner als ein vorgegebener Zeitdauerschwellwert ist. Vorzugsweise besteht eine weitere Bedingung darin, die erzeugten Schätzwerte zu verwerfen, wenn der während der Öffnungsphase des jew. Fensters überstrichene Winkel des Anhängers gegenüber dem Zugfahrzeug kleiner als ein vorgegebener Hubschwellwert ist bzw. wenn der Wertehub des Drehwinkels des Anhängers über Grund kleiner als ein vorgegebener Anhänger-Hubschwellwert ist.

In einer vorteilhaften Ausgestaltung der Erfindung werden die Schätzwerte mittels eines Kalman-Filters bestimmt, also insbesondere die Deichsellängen-Schätzwerte als auch die Schätzwerte für den Knickwinkel und die Schätzwerte für dessen Offset-Werte.

Besonders vorteilhaft ist es gemäß einer weiteren vorteilhaften Ausgestaltung der Erfindung die das Schätzzeitfenster bestimmenden Schwellwerte nicht nur in Abhängigkeit von konkreten Fahrsituationen zu bestimmen, sondern auch in Abhängigkeit von dem finalen Deichsellängen-Schätzwert oder von der ermittelten Deichsellänge.

Weiterhin ist es gemäß einer Ausgestaltung der Erfindung von Vorteil, als Startwert für das Schätzverfahren die anhand des letzten offenen Schätzzeitfensters bestimmten Schätzwerte zu verwenden und ansonsten Standard-Werte (Default-Werte) bzw. Worst-Case-Werte.

Ferner ist das erfindungsgemäße Verfahren auch für Zugfahrzeuge mit Hinterachslenkung geeignet, so dass zur Bestimmung eines Deichsellängen-Schätzwertes neben dem sensorisch erfassten Knickwinkel, dem Vorderachslenkwinkel, der Geschwindigkeit und Gierrate des Zugfahrzeugs auch der Hinterachslenkwinkel des Zugfahrzeugs verwendet wird.

Schließlich kann das erfindungsgemäße Verfahren zur Bestimmung der Deichsellänge eines Anhängers eines Zugfahrzeuges zur Bestimmung des maximal zulässigen Knickwinkels zwischen einem Zugfahrzeug und dessen Anhänger verwendet werden, indem bspw. einem Rangierassistenten der mit dem erfindungsgemäßen Verfahren bestimmte Wert der Deichsellänge zugeführt wird.

Die Erfindung wird nachfolgend anhand eines Ausführungsbeispiels unter Bezugnahme auf die beigefügten Figuren ausführlich beschrieben. Es zeigen:

Figur 1    eine schematische Draufsicht auf ein Zugfahrzeug und einen Anhänger mit den geometrischen und kinematischen Größen des Gespanns, und

Figuren 2    ein Ablaufdiagramm zur Erläuterung des erfindungsgemäßen Verfahrens.

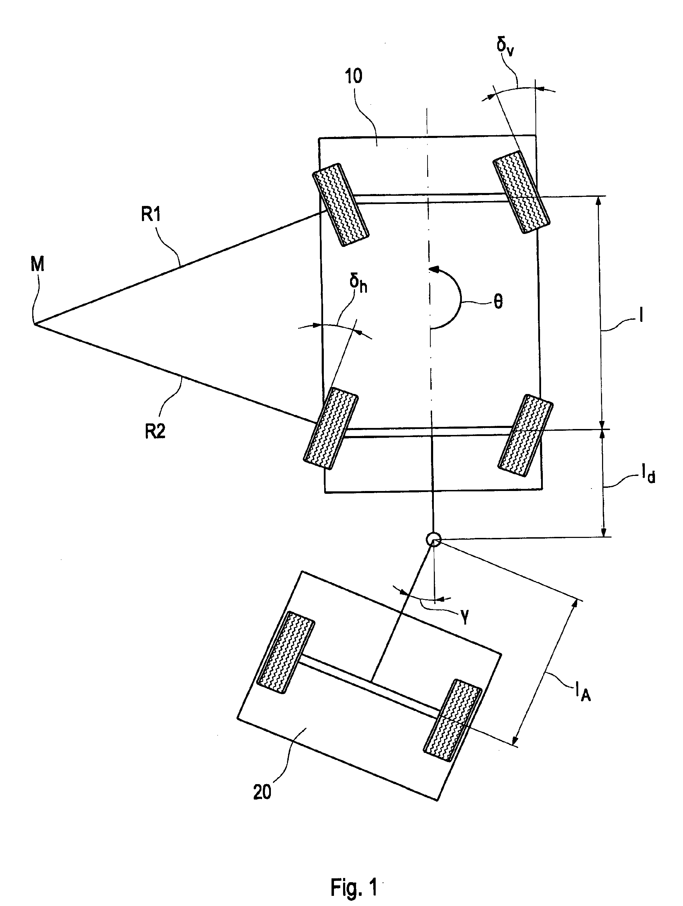

Wie in Figur 1 dargestellt, besteht ein Gespann aus einem Zugfahrzeug 10 und einem Anhänger 20, wobei zusätzlich für das im folgenden zu beschreibende Verfahren relevante Größen, sowohl geometrische als auch kinematische Größen dargestellt sind.

Das Zugfahrzeug weist sowohl ein Vorderachslenksystem als auch ein Hinterachslenksystem auf, wobei ein Lenkwinkel an der Vorderachse mit $\delta_v$ und ein Lenkwinkel an der Hinterachse mit $\delta_h$ bezeichnet ist, $l$ bezeichnet den Abstand der beiden Achsen, $l_d$ den Abstand der Hinterachse von dem Kugelkopf der Anhängerkupplung, $l_A$ die Deich-sellänge des Anhängers 20, $\gamma$ den Knickwinkel, also den Winkel zwischen der Längsachse der Zugfahrzeugs 10 und der Längsachse des Anhängers 20 und $\theta$ die Gierrate des Zugfahrzeugs 10.

Für die niedrigen Geschwindigkeiten, mit denen ein Gespann üblicherweise rangiert wird, kann die Bewegung des Gespanns im Wesentlichen durch ein Kinematikmodell ohne Berücksichtigung des Schräglaufwinkels beschrieben werden, so dass die Genauigkeit dieser elementargeometrischen Berechnungen für eine Beschreibung der Dynamik des Gespanns beim Rangieren, bspw. für einen Rangierassistenten, ausreichend sind. Zur Schätzung von Parametern dieses aus dem Zugfahrzeug 10 und dem Anhänger 20 bestehenden dynamischen Systems wird eine nichtlineare Variante eines Kalman-Filters verwendet, wobei die zu schätzenden Parameter der Knickwinkel $\gamma$ und der Offset $\Delta$ zwischen dem gemessenen Knickwinkel $\gamma_{mess}$ und dem tatsächlichen Knickwinkel $\gamma$ sind.

Der Zustand des Systems zu einem bestimmten Zeitpunkt t wird durch einen Zustandsvektor $x_k = (\gamma, \Delta, l_A)$ mit der Zustandsübergangsfunktion beschrieben wird:

$$x_k = f\left(x_{k-1}, u_{k-1}, v_{k-1}\right)$$

Hierbei ist $v_k$ ein ggf. mehrdimensionaler stochastischer Störterm, von dem man in der Regel annimmt, dass er jeweils unabhängig und normalverteilt ist, und $u_k$ externe Parameter, wie beispielsweise Lenkwinkel oder Geschwindigkeit im vorliegenden Fall.

Weiterhin besitzt das System ein beobachtbares Merkmal, nämlich den gemessenen Knickwinkel $\gamma_{mess}$. Die Beobachtungsfunktion wird daher durch die Messgleichung

$$z_k = h(\gamma_k, \Delta_k) + w_k$$

mit dem Beobachtungsvektor $z_k = y_k$ beschrieben, wobei die Beobachtung in guter Näherung als durch einen mittelwertfreien Rauschprozess $w_k$ mit der Fehlerkovarianz-matrix R mit $w_k \sim N(0, R_{11})$ additiv gestört betrachtet werden kann. Die Parameter des Kaiman-Filters sind die initiale Kovarianzmatrix des Zustandsvektors, der initiale Zustand, eine die Varianz des Prozessrauschens $v_k$ beschreibende dreidimensionale Diagonalmatrix $Q_{ii}$ und der Skalar $R_{11}$, der die Varianz des Messrauschens beschreibt.

Die Zustandsübergangsfunktion f wird für die Parameter des Zustandsvektors jeweils als diskretisierte Differentialgleichung formuliert:

$$\gamma_k = f_\gamma\left(\gamma_{k-1}, v_v + v_2, \delta_v + v_2, \delta_h + v_2, l, l_d, l_{A,k-1}, \theta\right) \qquad \text{(DGL1)}$$

$$\Delta_k = f_\Delta\left(\Delta_{k-1}, v_1\right) \qquad \text{(DGL2)}$$

$$l_{A,k} = f_{l_A}\left(l_{A,k-1}, v_3\right), \qquad \text{(DGL3)}$$

dabei ist $\gamma$ der Knickwinkel, $v_v$ die Geschwindigkeit des Zugfahrzeugs, $\delta_v$ bzw. $\delta_h$ der Lenkwinkel an der Vorderachse bzw. der Hinterachse des Zugfahrzeugs, $l$ der Radstand des Zugfahrzeugs, $l_d$ der Abstand der Hinterachse des Zugfahrzeugs von dem Kugelkopf der Anhängerkupplung, $l_A$ die Deichsellänge des Anhängers, $\theta$ die Gierrate des Zugfahrzeugs, $\Delta$ der Offset zwischen dem gemessenen Knickwinkel $\gamma_{mess}$ und dem tatsächlichen Knickwinkel $\gamma$, und $v_1$, $v_2$ bzw. $v_3$ jeweils ein Störterm des Rauschprozesses $v_k$, wobei die Gierrate $\theta$ ebenso wie die anderen Bewegungsgrößen sensorisch erfasst werden oder aus der Kinematik berechnet werden können.

Die Eingangsgrößen für diesen Filterprozess sind daher die Größen Geschwindigkeit $v_v$ des Zugfahrzeugs, Lenkwinkel $\delta_v$ bzw. $\delta_h$ an der Vorderachse bzw. der Hinterachse des Zugfahrzeugs und die Gierrate $\theta$ des Zugfahrzeugs, wobei der Achsabstand $l$ und der Überhang $l_d$ konstante Parameter des Schätzprozesses sind, welche die Geometrie des Zugfahrzeugs beschreiben.

Die Eingangsgrößen werden nur dann dem Schätzprozess zugeführt, wenn Fahrsituationen vorliegen, die für den Schätzprozess geeignete Werte dieser Eingangsgrößen liefern. Hierzu werden Schätzzeitfenster erzeugt, deren Beginn und Ende jeweils durch kalibrierbare Schwellwerte definiert sind. Während eines solchen Schätzzeitfensters werden die Eingangsgrößen erfasst und dem oben beschriebenen Kalman-Filter-Prozess zugeführt, um innere Schätzgrößen $\hat{\gamma}$, $\hat{\Delta}$ und $\hat{l}_A$ für den Knickwinkel $\gamma$, dem Offset $\Delta$ und der Deichsellänge $l_A$ mit dynamisch mitlaufenden Quantifizierungen der Genauigkeit der jeweiligen Schätzgrößen zu erzeugen.

Mit den zeitdiskretisierten Differentialgleichungen DGL1, DGL2 und DGL3 wird während eines Schätzzeitfensters ein Deichsellängen-Schätzwert $\hat{l}_A$ bestimmt, so dass mit aufeinanderfolgenden Schätzzeitfenstern eine erste Folge von Schätzwerten $\hat{l}_A$ entsteht, aus der eine zweite Folge statistischer Deichsellängen-Schätzwerte ($\hat{l}_{A,stat}$) bestimmt wird und die schließlich zu einer dritten Folge von finalen Schätzwerten $l_{A,final}$ der Deichsellänge $l_A$ führt, wie weiter unten erläutert werden soll.

Das Schätzzeitfenster wird bspw. gestartet, wenn der Anhänger sich relativ zum Zugfahrzeug ausreichend schnell dreht und die Querbeschleunigung und die Zugfahrzeuggeschwindigkeit klein genug sind. Das Schätzzeitfenster bleibt bspw. so lange offen, solange sich der Anhänger dreht. Das Fenster wird bspw. geschlossen, also der Schätzprozess beendet, wenn bspw. eine zu große Querbeschleunigung oder eine zu große oder zu kleine Zugfahrzeuggeschwindigkeit vorliegt, ebenso beispielsweise wenn ein Fahrregelsystem wie ESP oder ABS eingreift. Auch kann ein Schätzzeitfenster geschlossen werden, wenn das gemessene Knickwinkelsignal inkonsistent ist.

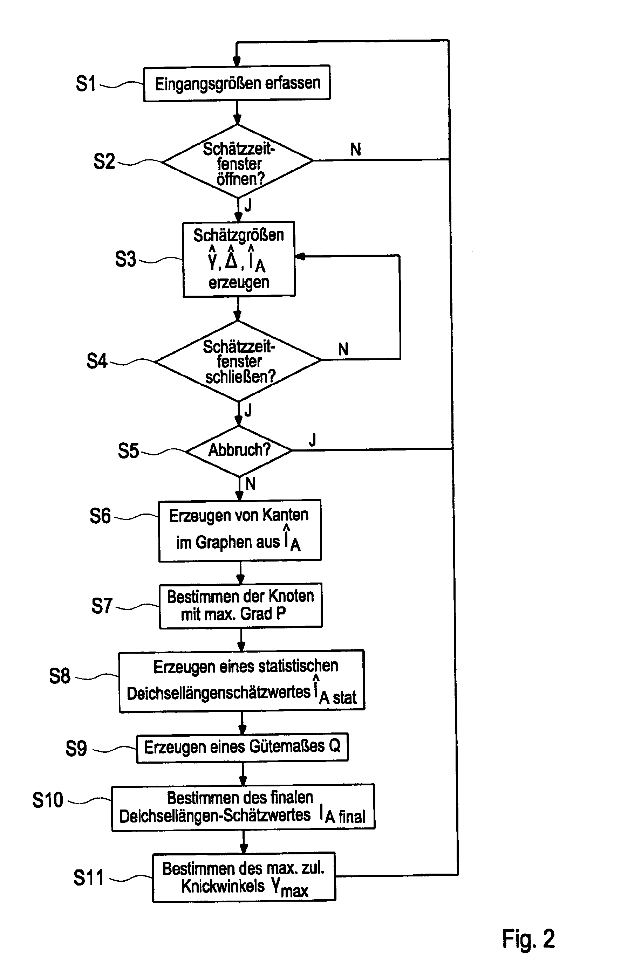

Das erfindungsgemäße Schätzverfahren wird anhand des Ablaufdiagramms gemäß Figur 2 erläutert. Bei diesem Schätzverfahren werden die zu erzeugenden drei unterschiedlichen Folgen von Deichsellängen-Schätzwerten der Deichsellänge $I_A$ entsprechend den Zeitschritten bzw. Rechenschritten fortlaufend, also "on-the-fly" aus den bis zum aktuellen Zeitschritt vorliegenden Schätzwerten erzeugt.

Nach Figur 2 werden in einem ersten Schritt S1 die Eingangsgrößen erfasst und in einem zweiten Schritt S2 geprüft, ob deren Werte in dem von den zugehörigen Schwellwerten vorgegebenen Wertebereichen liegen. Falls dies nicht zutrifft, wird auf den Schritt S1 zurückverzweigt oder zutreffendenfalls ein Schätzzeitfenster geöffnet.

Im nachfolgenden Schritt S3 werden auf der Basis des oben beschriebenen Filterprozesses mittels eines Kalman-Filters die Schätzgrößen $\hat{\gamma}$ für den Knickwinkel, $\hat{\Delta}$ für den Offset und $\hat{I}_A$ für die Deichsellänge erzeugt. In einem nachfolgenden Schritt S4 wird geprüft, ob das Schätzzeitfenster geschlossen werden muss, falls die Werte der Eingangsgrößen nicht mehr in den durch die entsprechenden Schwellwerte definierten Bereichen liegen. Falls die Eingangsgrößen die Schwellwert-Bedingungen erfüllen, wird das Fenster nicht geschlossen und zur Ausführung des nächsten Schätzschrittes auf den Schritt S3 zurückverzweigt.

Falls die Eingangsgrößen die Schwellwert-Bedingungen nicht mehr erfüllen, wird das Schätzzeitfenster geschlossen und in einem nachfolgenden Schritt

S5 die Verwendbarkeit des Deichsellängen-Schätzwertes $\hat{I}_A$ anhand einer nachfolgend erläuterten Liste von Kriterien geprüft, bei deren Erfüllung dieser Schätzwert verworfen wird.

Solche Schätzwerte werden bspw. dann verworfen, wenn die Zeitdauer des Schätzzeitfensters zu kurz war, oder wenn sich die während der Zeitdauer des geöffneten Schätzzeitfensters aufintegrierte Veränderung des gemes-senen Knickwinkels $\gamma$, also der Hub des Knickwinkels, zu klein war. Hierzu wird bspw. ein Zeitdauerschwellwert bzw. ein Hubschwellenwert definiert. Zutreffendenfalls, wenn also diese Schwellenbedingungen erfüllt werden, wird auf den Eingangsschritt S1 zurückverzweigt. Zusätzlich kann in analoger Weise auch die Drehrate des Anhängers während der Zeitdauer des Schätzzeitfensters herangezogen werden, um den Hub über Grund des Anhängers zu überprüfen.

Falls die Bedingungen an die Gültigkeit des gerade beendeten und überprüften Fensters erfüllt sind, erfolgt gemäß Figur 2 in den nachfolgenden Schritten S6 bis S9 ein inkrementeller Aufbau eines Graphen zur Bestimmung eines statistischen Deichsellängen-Schätzwertes $\hat{I}_{A,stat}$ der Deichsellänge $I_A$. Die Knotenmenge des Graphen wird um je einen Knoten erweitert, der dem soeben als gültig erkannten Deichsellängen-Schätzwert $\hat{I}_A$ aus Schritt S5 entspricht. So werden zunächst in dem Schritt S6 auf der Basis eines Abstandsmaßes Kanten zwischen zwei Knoten gezogen, bspw. wenn die Werte der Knoten hinreichend ähnlich sind, sie sich bspw. um höchstens x% unterscheiden, wobei x mittels eines Schwellwertes vorgegeben wird, der bspw. zwischen 0,1% und 50% gewählt werden kann. Damit wird für jeden Knoten im mathematischen Sinn eine Nachbarschaft definiert.

Im nächsten Schritt S7 wird für jeden Knoten der Grad bestimmt, d. h. die Anzahl der Kanten, die diesen Knoten mit anderen Knoten verbindet. Anschließend werden die Knoten mit maximalen Grad ermittelt und hieraus in Schritt S8 das arithmetische Mittel über die Knoten mit maximalen Grad als statistischer Deichsellängen-Schätzwert $\hat{I}_{A,stat}$ bestimmt.

Alternativ kann zur Bestimmung des statistischen Deichsellängen-Schätzwertes $\hat{I}_{A,stat}$ auch das Minimum oder Maximum über Knoten mit maximalen Grad gebildet werden. Ferner ist es auch möglich, hierzu diejenigen Knoten zu betrachten, die an einer maximalen Clique beteiligt sind. Unter einer Clique in der mathematischen Graphentheorie versteht man die Menge der Knoten, die paarweise mit einer Kante verbunden sind.

Das dem statistischen Deichsellängen-Schätzwert $\hat{I}_{A,stat}$ zugehörige Gütemaß Q wird in einem nachfolgenden Schritt S9 bestimmt. Dieses Gütemaß Q hängt von dem bisher aufgebauten Graphen und dem Abstandsmaß ab. Der Wert Q des Gütemaßes liegt zwischen 0 und 1 und wird in Abhängigkeit des für die Bestimmung des statistischen Deichsellängen-Schätzwertes $\hat{I}_{A,stat}$ maßgeblichen maximalen Grades P bestimmt. So kann bspw. einem Grad P < 4 ein Q-Wert von 0,00 zugeordnet werden, einem Grad P > 10 bspw. ein Q-Wert von 1,00. Die dazwischen liegenden Werte für den Grad P können gleichmäßig oder ungleichmäßig aufgeteilt werden.

Mit diesen beiden Werten, dem statistischen Deichseitängen-Schätzwert $\hat{I}_{A,stat}$ und dem zughörigen Gütemaß Q wird in einem Schritt S10 ein finaler Schätzwerte $I_{A,final}$ für die Deichsellänge $I_A$ bestimmt, der über die Folge von Schätzzeitfenstern mit hoher Wahrscheinlichkeit in eine Umgebung eines Wertes konvergiert, der sich dem wahren Wert der Deichsellänge $I_A$ von unten annähert. Dieser finale Schätzwert $I_{A,final}$ der Deichsellänge $I_A$ kann bspw. gemäß folgender Formel

$$l_A = \hat{l}_A * Q$$

bestimmt werden. Bei einem Gütemaß $Q$ mit dem Wert 0 wird für die Deichsellänge von einem Default-Wert, ausgegangen, bspw. von der kürzest möglichen Deichsellänge eines zulässigen Anhängers, die einem Worst-Case-Wert entspricht.

Aus diesem finalen Schätzwert $l_{A,final}$ für die Deichsellänge $l_A$ wird in einem Schritt S11 der maximal zulässige Knickwinkel $\gamma_{max}$ elementargeometrisch mittels der Größen Radstand $l$ des Zugfahrzeuges, Abstand $l_d$ der Hinterachse vom Kugelkopf der Anhänger-kupplung, Deichsellänge $l_A$ des Anhängers, maximalen vorderen und hinteren Lenkwinkel $\delta_{v,max}$ bzw. $\delta_{h,max}$ und dem Radius $R_1$ und $R_2$ (vgl. Figur 1). Bis zu diesem maximal zulässigen Knickwinkel $\gamma_{max}$ kann ein Anhänger während der Rückwärtsfahrt noch gerade geschoben werden.

Weil die Kinematik und die Dynamik des Gespanns stark von der tatsächlichen Deichsellänge abhängt, ist es vorteilhaft, die Schwellwerte für die Erzeugung des Schätzzeitfensters auch in Abhängigkeit von der aktuellen Schätzung der Deichsellänge zu machen und nicht nur von den Eingangsgrößen.

Insbesondere kann das zu einer Verwerfung des Schätzwertes führende Kriterium gemäß Schritt S5 hinsichtlich des Vorliegens eines bestimmten Hubs des Knickwinkels an den letzten Schätzwert der Deichsellänge derart angepasst werden, dass der zugehörige Schwellwert erhöht wird, wenn eine lange Deichsellänge geschätzt wurde, um zu verhindern, dass ein zu großer Wert für die Deichsellänge geschätzt würde. Falls dieser erhöhte Hubwert nicht detektiert wird, wird das Schätzzeitfenster und damit auch die möglicherweise zu große Schätzung der Deichsellänge verworfen. Weiterhin ist es vorteilhaft, beim Öffnen eines neuen Schätzzeitfensters die Startwerte des Kalman-Filters ganz oder teilweise an die beim Schließen des letzten Schätzzeitfensters erhaltenen Schätzwerte anzupassen. Um mit nur wenigen Schätzzyklen einen genauen Schätzwert zu erhalten, ist es ferner auch möglich, bestimmte Situationen im Fahrbetrieb, wie bspw. ein Geradeziehen des Gespanns in die Setzung der Startwerte mit einzubeziehen, da nach solchen Fahrsituationen im Allgemeinen geringere Unsicherheiten als im normalen Fahrbetrieb bestehen. Insbesondere ist nach dem Geradeziehen des Gespanns der Offset zwischen dem gemessenen und dem tatsächlichen Knickwinkel bekannt und somit dessen Unsicherheit klein.

Nach der Ausgabe des maximal zulässigen Knickwinkels $\gamma_{max}$ bspw. an einen Rangierassistenten wird wieder auf Schritt S1 zurückverzweigt.

## Patentansprüche

1. Verfahren zur Bestimmung der Deichsellänge ($l_A$) eines Anhängers (20) eines Zugfahrzeuges (10) mit einem Vorderachslenksystem zur Einstellung eines Vorderachslenkwinkels ($\delta_v$), bei welchem aus einem sensorisch erfassten Knickwinkel ($\gamma$) zwischen dem Anhänger und dem Zugfahrzeug auf der Basis des Vorderachslenkwinkels ($\delta_v$) sowie den Bewegungsgrößen Geschwindigkeit ($v_v$) und Gierrate ($\theta$) des Zugfahrzeugs (10) mittels eines Schätzverfahrens ein Schätzwert ($\hat{l}_A$) für die Deichsellänge ($l_A$) bestimmt wird,

   **dadurch gekennzeichnet, dass**

   - das Schätzverfahren ausgebildet ist zur Erzeugung einer Folge von Schätzzeitfenstern, wobei am Ende eines jeden Schätzzeitfensters ein Deichsellängen-Schätzwert $\hat{l}_A$) für die Deichsellänge ($l_A$) bestimmt wird,
   - das Ende eines Schätzzeitfensters durch das Vorliegen vorgegebener Bedingungen hinsichtlich dynamischer Bewegungsgrößen des Zugfahrzeugs (10) und des Anhängers (20) definiert wird,
   - sukzessiv aus den vorliegenden Deichsellängen-Schätzwerten $\hat{l}_A$) mittels statistischer Auswertung statistische Deichsellängen-Schätzwerte $\hat{l}_{A,stat}$) mit jeweils einem Gütemaß ($Q$) bestimmt werden,

   und

   - sukzessiv finale Schätzwerte ($l_{A,final}$) für die Deichsellänge ($l_A$) aus den jeweils mit dem Gütemaß (Q) gewichteten statistischen Deichsellängen-Schätzwerten $\hat{l}_{A,stat}$) bestimmt werden.

2. Verfahren nach Anspruch 1,
   **dadurch gekennzeichnet, dass** der während eines Schätzzeitfensters erzeugte Deichsellängen-Schätzwert $\hat{l}_A$) unter Verwendung eines Knickwinkel-Schätzwertes ($\hat{\gamma}$) für den Knickwinkel ($\gamma$) und eines Offset-Schätzwertes ($\hat{\Delta}$) für den Offset ($\Delta$) zwischen dem Knickwinkel-Schätzwert (y) und dem sensorisch erfassten Knickwinkel ($\gamma$) erfolgt, wobei der Knickwinkel-Schätzwert ($\hat{\gamma}$) für den Knickwinkel ($\gamma$) und der Offset-Schätzwert ($\hat{\Delta}$) für den Offset zwischen

dem Knickwinkel-Schätzwert $(\hat{\gamma})$ und dem sensorisch erfassten Knickwinkel $(\gamma)$ mittels des Schätzverfahrens bestimmt wird.

**3.** Verfahren nach Anspruch 1 oder 2,
**dadurch gekennzeichnet, dass** zur statistischen Auswertung der Deichsellängen-Schätzwerte $(\hat{l}_A)$ aus den vorliegenden Deichsellängen-Schätzwerten $(\hat{l}_A)$ fortlaufend ein ungerichteter Graph erzeugt wird, wobei in Abhängigkeit des Wertes eines Abstandsmaßes zwischen den Deichsellängen-Schätzwerten $(\hat{l}_A)$ als Knoten eine Kante gezogen wird.

**4.** Verfahren nach Anspruch 3,
**dadurch gekennzeichnet, dass** der statistische Deichsellängen-Schätzwert $(\hat{l}_{A,stat})$ als gewichteter Deichsellängen-Schätzwert $(\hat{l}_A)$ aus den Knoten des aktuell erzeugten Graphen mit maximalen Grad (P) bestimmt wird und das Gütemaß (Q) in Abhängigkeit vom maximalen Grad (P) bestimmt wird.

**5.** Verfahren nach Anspruch 3,
**dadurch gekennzeichnet, dass** der statistische Deichsellängen-Schätzwert $(\hat{l}_{A,stat})$ als Minimum der Knoten des aktuell erzeugten Graphen mit maximalem Grad (P) bestimmt wird und das Gütemaß (Q) in Abhängigkeit vom maximalen Grad (P) bestimmt wird.

**6.** Verfahren nach Anspruch 3,
**dadurch gekennzeichnet, dass** der statistische Deichsellängen-Schätzwert $(\hat{l}_{A,stat})$ als Maximum der Knoten des aktuell erzeugten Graphen mit maximalen Grad (P) bestimmt wird und das Gütemaß (Q) in Abhängigkeit vom maximalen Grad (P) bestimmt wird.

**7.** Verfahren nach Anspruch 3,
**dadurch gekennzeichnet, dass** der statistische Deichsellängen-Schätzwert $(\hat{l}_{A,stat})$ aus der Menge der Knoten bestimmt wird, die an einer maximalen Clique des aktuell erzeugten Graphen beteiligt sind, und das Gütemaß (Q) in Abhängigkeit vom maximalen Grad (P) bestimmt wird.

**8.** Verfahren nach einem der vorhergehenden Ansprüche,
**dadurch gekennzeichnet, dass** das Schätzzeitfenster aus wenigstens den Bewegungsgrößen Drehrate $(\theta)$ und Geschwindigkeit $(v_v)$ des Zugfahrzeugs (10), der Drehrate (10) des Anhängers (20) gegenüber dem Zugfahrzeug (10) abgeleitet wird.

**9.** Verfahren nach Anspruch 8,
**dadurch gekennzeichnet, dass** Schwellwerte für die Bewegungsgrößen $(\theta, v_v)$ bestimmt werden, als Funktion derer das Schätzzeitfenster geöffnet bzw. geschlossen wird.

**10.** Verfahren nach einem der vorhergehenden Ansprüche,
**dadurch gekennzeichnet, dass** der während eines Schätzzeitfensters erzeugte Schätzwert $(\hat{l}_{A,k}, \hat{\Delta}_k, \hat{\gamma}_k)$ verworfen wird, wenn die Zeitdauer des Schätzzeitfensters kleiner als ein vorgegebener Zeitdauerschwellwert ist.

**11.** Verfahren nach einem der vorhergehenden Ansprüche,
**dadurch gekennzeichnet, dass** der während eines Schätzzeitfensters erzeugte Schätzwert $(\hat{l}_{A,k}, \hat{\Delta}_k, \hat{\gamma}_k)$ verworfen wird, wenn der während des Schätzzeitfensters überstrichene Knickwinkel des Anhängers (20) gegenüber dem Zugfahrzeug (10) kleiner als ein vorgegebener Hubschwellwert ist.

**12.** Verfahren nach einem der vorhergehenden Ansprüche,
**dadurch gekennzeichnet, dass** der während eines Schätzzeitfensters erzeugte Schätzwert $(\hat{l}_{A,k}, \hat{\Delta}_k, \hat{\gamma}_k)$ verworfen wird, wenn der während des Zeitfensters überstrichene Wertehub des Drehwinkels des Anhängers (20) über Grund kleiner als ein vorgegebener Anhänger-Hubschwellwert ist.

**13.** Verfahren nach einem der vorhergehenden Ansprüche,
**dadurch gekennzeichnet, dass** die Schätzwerte $(\hat{l}_{A,k}, \hat{\Delta}_k, \hat{\gamma}_k)$ mittels eines Kaiman-Filters bestimmt werden.

**14.** Verfahren nach einem der Ansprüche 9 bis 13,
**dadurch gekennzeichnet, dass** die das Schätzzeitfenster bestimmenden Schwellwerte als Funktion des Deichsellängen-Schätzwertes $(\hat{l}_A)$ oder des finalen Schätzwertes $(l_{A,final})$ für die Deichsellänge $(l_A)$ bestimmt werden.

**15.** Verfahren nach einem der vorhergehenden Ansprüche,
**dadurch gekennzeichnet, dass** als Startwert für das Schätzverfahren die anhand des letzten offenen Schätzzeitfensters bestimmten Schätzwerte verwendet werden, ansonsten Standard-Werte (Default-Werte).

**16.** Verfahren nach einem der vorhergehenden Ansprüche,
**dadurch gekennzeichnet, dass** das Zugfahrzeug zusätzlich zum Vorderachslenksystem zur Einstellung eines Vorderachslenkwinkels ($\delta_v$) ein Hinterachslenksystem zur Einstellung eines Hinterachslenkwinkels ($\delta_h$) aufweist, wobei aus einem sensorisch erfassten Knickwinkel ($\gamma$) zwischen dem Anhänger und dem Zugfahrzeug auf der Basis des Vorderachslenkwinkels ($\delta_v$), des Hinterachslenkwinkels ($\delta_h$) sowie den Bewegungsgrößen Geschwindigkeit ($v_v$) und Gierrate ($\theta$) des Zugfahrzeugs (10) mittels eines Schätzverfahrens ein Schätzwert für die Deichsellänge ($l_A$) bestimmt wird.

**17.** Verwendung des Verfahrens zur Bestimmung der Deichsellänge ($l_A$)
eines Anhängers (20) eines Zugfahrzeuges (10) nach einem der vorhergehenden Ansprüche zur Bestimmung des maximal zulässigen Knickwinkels ($\gamma_{max}$) zwischen dem Zugfahrzeug (10) und dessen Anhänger (20).

**Claims**

**1.** Method for determining the drawbar length ($l_A$) of a trailer (20) of a tow vehicle (10) having a front-axle steering system for adjusting a front-axle steering angle ($\delta_v$), in which method an estimated value ($\hat{l}_A$) for the drawbar length ($l_A$) is determined by means of an estimation method from a sensed articulation angle ($\gamma$) between the trailer and the tow vehicle on the basis of the front-axle steering angle ($\delta_v$) and of the movement variables of speed ($v_v$) and yaw rate ($\theta$) of the tow vehicle (10), **characterised in that**

- the estimation method is designed to generate a sequence of estimation time windows, a drawbar length estimated value ($\hat{l}_A$) being determined for the drawbar length ($l_A$) at the end of each estimation time window,
- the end of an estimation time window is defined by the presence of predetermined conditions relating to dynamic movement variables of the tow vehicle (10) and the trailer (20),
- statistical drawbar length estimated values ($\hat{l}_{A,stat}$) each having a quality measure (Q) are successively determined from the available drawbar length estimated values ($\hat{l}_A$) by means of statistical evaluation,
- final estimated values ($l_{A,\,final}$) for the drawbar length ($l_A$) are successively determined from the statistical drawbar length estimated values ($\hat{l}_{A,\,stat}$) which have each been weighted by the quality measure (Q).

**2.** Method according to claim 1, **characterised in that** the drawbar length estimated value ($\hat{l}_A$) is generated during an estimation time window using an articulation angle estimated value ($\hat{\gamma}$) for the articulation angle ($\gamma$) and an offset estimated value ($\hat{\Delta}$) for the offset ($\Delta$) between the articulation angle estimated value ($\hat{\gamma}$) and the sensed articulation angle ($\gamma$), the articulation angle estimated value ($\hat{\gamma}$) for the articulation angle ($\gamma$) and the offset estimated value ($\hat{\Delta}$) for the offset between the articulation angle estimated value ($\hat{\gamma}$) and the sensed articulation angle ($\gamma$) being determined by means of the estimation method.

**3.** Method according to either claim 1 or claim 2, **characterised in that** an undirected graph is continuously generated from the available drawbar length estimated values ($\hat{l}_A$) for the statistical evaluation of the drawbar length estimated values ($\hat{l}_A$), an edge being drawn on the basis of the value of a distance measurement between the drawbar length estimated values ($\hat{l}_A$) as nodes.

**4.** Method according to claim 3, **characterised in that** the statistical drawbar length estimated value ($\hat{l}_{A,\,stat}$) is determined as a weighted drawbar length estimated value ($\hat{l}_A$) from the nodes of the currently generated graph having a maximum degree (P), and the quality measure (Q) is determined on the basis of the maximum degree (P).

**5.** Method according to claim 3, **characterised in that** the statistical drawbar length estimated value ($\hat{l}_{A,\,stat}$) is determined as a minimum of the nodes of the currently generated graph having the maximum degree (P), and the quality measure (Q) is determined on the basis of the maximum degree (P).

**6.** Method according to claim 3, **characterised in that** the statistical drawbar length estimated value ($\hat{l}_{A,\,stat}$) is determined as a maximum of the nodes of the current graph having the maximum degree (P), and the quality measure (Q) is determined on the basis of the maximum degree (P).

7. Method according to claim 3, **characterised in that** the statistical drawbar length estimated value ($\hat{i}_{A, stat}$) is determined from the set of the nodes that are part of a maximum clique of the currently generated graph, and the quality measure (Q) is determined on the basis of the maximum degree (P).

8. Method according to any of the preceding claims, **characterised in that** the estimation time window is derived from at least the movement variables of yaw rate ($\theta$) and speed ($v_v$) of the tow vehicle (10), and the yaw rate (10) of the trailer (20) relative to the tow vehicle (10).

9. Method according to claim 8, **characterised in that** threshold values are determined for the movement variables ($\theta$, $v_v$), the estimation time window being opened and closed as a function thereof.

10. Method according to any of the preceding claims, **characterised in that** the estimated value ($\hat{i}_{A, k}$, $\hat{\Delta}_k$, $\hat{\gamma}_k$) generated during an estimation time window is discarded if the duration of the estimation time window is smaller than a predetermined duration threshold value.

11. Method according to any of the preceding claims, **characterised in that** the estimated value ($\hat{i}_{A, k}$, $\hat{\Delta}_k$, $\hat{\gamma}_k$) generated during an estimation time window is discarded if the articulation angle of the trailer (20) relative to the tow vehicle (10) swept during the estimation time window is smaller than a predetermined swing threshold value.

12. Method according to any of the preceding claims, **characterised in that** the estimated value ($\hat{i}_{A, k}$, $\hat{\Delta}_k$, $\hat{\gamma}_k$) generated during an estimation time window is discarded if the swing of the value of the rotation angle of the trailer (20) above ground swept during the time window is smaller than a predetermined trailer swing threshold value.

13. Method according to any of the preceding claims, **characterised in that** the estimated values ($\hat{i}_{A, k}$, $\hat{\Delta}_k$, $\hat{\gamma}_k$) are determined by means of a Kalman filter.

14. Method according to any of claims 9 to 13, **characterised in that** the threshold values determining the estimation time window are determined as a function of the drawbar length estimated value ($\hat{i}_A$) or of the final estimated value ($l_{A, final}$) for the drawbar length ($l_A$).

15. Method according to any of the preceding claims, **characterised in that** the estimation method uses as a starting value either the estimated values determined on the basis of the last open estimation time window, or standard values (default values).

16. Method according to any of the preceding claims, **characterised in that** the tow vehicle comprises, in addition to the front-axle steering system for adjusting a front-axle steering angle ($\delta_v$), a rear-axle steering system for adjusting a rear-axle steering angle ($\delta_h$), an estimated value for the drawbar length ($l_A$) being determined by means of an estimation method from a sensed articulation angle ($\gamma$) between the trailer and the tow vehicle on the basis of the front-axle steering angle ($\delta_v$), the rear-axle steering angle ($\delta_h$) and the movement variables of speed ($v_v$) and yaw rate ($\theta$) of the tow vehicle (10).

17. Use of the method for determining the drawbar length ($l_A$) of a trailer (20) of a tow vehicle (10) according to any of the preceding claims in determining the maximum permissible articulation angle ($\gamma_{max}$) between the tow vehicle (10) and its trailer (20).

**Revendications**

1. Procédé de détermination de la longueur ($l_A$) de la barre d'attelage d'une remorque (20) d'un véhicule tracteur (10) avec un système de direction d'essieu avant afin de régler un angle de direction d'essieu avant ($\delta_v$), dans lequel, à partir d'un angle d'articulation ($\gamma$) déterminée par technique sensorielle entre la remorque et le véhicule tracteur sur la base de l'angle de direction d'essieu avant ($\delta_v$) ainsi que des grandeurs de mouvement, la vitesse ($v_v$) et la vitesse de lacet ($\theta$), du véhicule tracteur (10), on détermine au moyen d'un procédé d'évaluation une valeur d'évaluation ($\hat{l}_A$) pour la longueur de la barre d'attelage ($l_A$),
**caractérisé en ce que** :

   - le procédé d'évaluation est conçu pour produire une suite de fenêtres temporelles d'évaluation, dans lequel on détermine, à la fin de chaque fenêtre temporelle d'évaluation, une valeur d'évaluation ($\hat{l}_A$) de la longueur ($l_A$)

de la barre d'attelage,

- la fin d'une fenêtre temporelle d'évaluation est définie par la présence de conditions prédéterminées relatives aux grandeurs de mouvement dynamiques du véhicule tracteur (10) et de la remorque (20),

- des valeurs d'évaluation statistiques $(\hat{l}_{A,stat})$ de la longueur de la barre d'attelage sont déterminées successivement à partir de valeurs d'évaluation courantes $(l_A)$ de la longueur de la barre d'attelage par évaluation statistique avec respectivement une échelle de qualité (Q), et

- des valeurs d'évaluation finales $(l_{A,finale})$ de la longueur $(l_A)$ de la barre d'attelage sont successivement déterminées à partir des valeurs d'évaluation statistiques $(\hat{l}_{A,stat})$ de la longueur de la barre d'attelage pondérées respectivement avec l'échelle de qualité (Q).

2. Procédé selon la revendication 1,
**caractérisé en ce que** la valeur d'évaluation $(\hat{l}_A)$ de la longueur de la barre d'attelage produite au cours d'une fenêtre temporelle d'évaluation s'obtient en utilisant une valeur d'évaluation $(\hat{\gamma})$ pour l'angle d'articulation $(\gamma)$ et une valeur d'évaluation $(\hat{\Delta})$ pour le décalage $(\Delta)$ entre la valeur d'évaluation $(\hat{\gamma})$ pour l'angle d'articulation et l'angle d'articulation $(\gamma)$ saisi par technique sensorielle, dans lequel la valeur d'évaluation $(\hat{\gamma})$ pour l'angle d'articulation $(\gamma)$ et la valeur d'évaluation $(\hat{\Delta})$ pour le décalage $(\Delta)$ entre la valeur d'évaluation $(\hat{\gamma})$ de l'angle d'articulation et l'angle d'articulation $(\gamma)$ saisi par technique sensorielle sont déterminées au moyen du procédé d'évaluation.

3. Procédé selon la revendication 1 ou la revendication 2,
**caractérisé en ce que**, pour l'évaluation statistique des valeurs d'évaluation $(\hat{l}_A)$ de la longueur de la barre d'attelage, on produit à partir des valeurs d'évaluation courantes $(\hat{l}_A)$ de la longueur de la barre d'attelage en permanence un graphe non dirigé, dans lequel, en fonction de la valeur d'une mesure d'écart entre les valeurs d'évaluation $(\hat{l}_A)$ de la longueur de la barre d'attelage en tant que noeuds, on trace une arête.

4. Procédé selon la revendication 3,
**caractérisé en ce que** la valeur d'évaluation statistique $(\hat{l}_{A,stat})$ de la longueur de la barre d'attelage est déterminée comme valeur d'évaluation $(\hat{l}_A)$ pondérée de la longueur de la barre d'attelage à partir des noeuds du graphe couramment produit avec un degré maximal (P) et l'échelle de qualité (Q) est déterminée en fonction du degré maximal (P).

5. Procédé selon la revendication 3,
**caractérisé en ce que** la valeur d'évaluation statistique $(\hat{l}_{A,stat})$ de la longueur de la barre d'attelage est déterminée comme minimum des noeuds du graphe couramment produit avec un degré maximal (P) et l'échelle de qualité (Q) est déterminée en fonction du degré maximal (P).

6. Procédé selon la revendication 3,
**caractérisé en ce que** la valeur d'évaluation statistique $(\hat{l}_{A,stat})$ de la longueur de la barre d'attelage est déterminée comme maximum des noeuds du graphe couramment produit avec un degré maximal (P) et l'échelle de qualité (Q) est déterminée en fonction du degré maximal (P).

7. Procédé selon la revendication 3,
**caractérisé en ce que** la valeur d'évaluation statistique $(\hat{l}_{A,stat})$ de la longueur de la barre d'attelage est déterminée à partir de la quantité des noeuds qui participent à une clique maximale du graphe couramment produit et l'échelle de qualité (Q) est déterminée en fonction du degré maximal (P).

8. Procédé selon l'une quelconque des revendications précédentes,
**caractérisé en ce que** la fenêtre temporelle d'évaluation est tirée d'au moins les grandeurs de mouvement, la vitesse de lacet $(\theta)$ et la vitesse $(v_V)$ du véhicule tracteur (10), la vitesse de lacet (10) de la remorque (20) par rapport au véhicule tracteur (10).

9. Procédé selon la revendication 8,

**caractérisé en ce que** l'on détermine des valeurs de
seuil pour les grandeurs de mouvement $(\theta, v_v)$ en fonction desquelles la fenêtre temporelle d'évaluation est ouverte ou fermée.

**10.** Procédé selon l'une quelconque des revendications précédentes,
**caractérisé en ce que** la valeur d'évaluation $(\hat{l}_{A,k}, \hat{\Delta}_k, \hat{\gamma}_k)$
produite au cours d'une fenêtre temporelle d'évaluation est rebutée lorsque la durée de la fenêtre temporelle d'évaluation est plus petite qu'une valeur de seuil de durée prédéterminée.

**11.** Procédé selon l'une quelconque des revendications précédentes,
**caractérisé en ce que** la valeur d'évaluation $(\hat{l}_{A,k}, \hat{\Delta}_k, \hat{\gamma}_k)$
produite au cours d'une fenêtre temporelle d'évaluation est rebutée lorsque l'angle d'articulation de la remorque (20) balayé au cours de la fenêtre temporelle d'évaluation par rapport au véhicule tracteur (10) est plus petit qu'une valeur de seuil de levage prédéterminée.

**12.** Procédé selon l'une quelconque des revendications précédentes,
**caractérisé en ce que** la valeur d'évaluation $(\hat{l}_{A,k}, \hat{\Delta}_k, \hat{\gamma}_k)$
produite au cours d'une fenêtre temporelle d'évaluation est rebutée lorsque l'élévation de valeur de l'angle de rotation de la remorque (20) balayée au cours de la fenêtre temporelle au-dessus du sol est plus petite qu'une valeur de seuil de levage prédéterminée de la remorque.

**13.** Procédé selon l'une quelconque des revendications précédentes,
**caractérisé en ce que** les valeurs d'évaluation
$(\hat{l}_{A,k}, \hat{\Delta}_k, \hat{\gamma}_k)$ sont déterminées au moyen d'un filtre de Kalmann.

**14.** Procédé selon l'une quelconque des revendications 9 à 13,
**caractérisé en ce que** les valeurs de seuil déterminant
la fenêtre temporelle d'évaluation sont déterminées en fonction de la valeur d'évaluation $(\hat{l}_A)$ de la longueur de la barre d'attelage ou de la valeur d'évaluation finale $(l_{A, finale})$ pour la longueur $(l_A)$ de la barre d'attelage.

**15.** Procédé selon l'une quelconque des revendications précédentes,
**caractérisé en ce que** l'on utilise comme valeur de
départ pour le procédé d'évaluation les valeurs d'évaluation déterminées sur la base de la dernière fenêtre temporelle d'évaluation ouverte, autrement des valeurs standard (valeurs par défaut).

**16.** Procédé selon l'une quelconque des revendications précédentes,
**caractérisé en ce que** le véhicule tracteur présente,
en plus du système de direction de l'essieu avant pour le réglage d'un angle de direction d'essieu avant $(\delta_v)$, un système de direction d'essieu arrière pour le réglage d'un angle de direction d'essieu arrière $(\delta_h)$, dans lequel on détermine une valeur d'évaluation pour la longueur $(l_A)$ de la barre d'attelage à partir d'un angle d'articulation $(\gamma)$ saisi par technique sensorielle entre la remorque et le véhicule tracteur sur la base de l'angle de direction d'essieu avant $(\delta_v)$, de l'angle de direction d'essieu arrière $(\delta_h)$ ainsi que des grandeurs de mouvement, la vitesse $(v_v)$ et la vitesse de lacet $(\theta)$ du véhicule tracteur (10) au moyen d'un procédé d'évaluation.

**17.** Utilisation du procédé de détermination de la longueur $(l_A)$ de la barre d'attelage d'une remorque (20) d'un véhicule tracteur (10) selon l'une quelconque des revendications précédentes pour déterminer l'angle d'articulation maximal autorisé $(\gamma_{max})$ entre le véhicule tracteur (10) et sa remorque (20).

Fig. 1

S1 — Eingangsgrößen erfassen

S2 — Schätzzeit-fenster öffnen? — N

J

S3 — Schätzgrößen $\hat{Y}, \hat{\Delta}, \hat{I}_A$ erzeugen

S4 — Schätzzeit-fenster schließen? — N

J

S5 — Abbruch? — J

N

S6 — Erzeugen von Kanten im Graphen aus $\hat{I}_A$

S7 — Bestimmen der Knoten mit max. Grad P

S8 — Erzeugen eines statistischen Deichsellängenschätzwertes $\hat{I}_{A\,stat}$

S9 — Erzeugen eines Gütemaßes Q

S10 — Bestimmen des finalen Deichsellängen-Schätzwertes $I_{A\,final}$

S11 — Bestimmen des max. zul. Knickwinkels $Y_{max}$

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040130441 A1
- US 20050055138 A1
- DE 2007025969 A1